(19) **Europäisches Patentamt / European Patent Office / Office européen des brevets**

(11) **EP 4 501 509 A1**

(12) **EUROPEAN PATENT APPLICATION**
published in accordance with Art. 153(4) EPC

(43) Date of publication:
05.02.2025 Bulletin 2025/06

(21) Application number: 23807352.2

(22) Date of filing: 17.04.2023

(51) International Patent Classification (IPC):
$B23K\ 9/032^{(2006.01)}$    $B23K\ 9/04^{(2006.01)}$
$B23K\ 9/073^{(2006.01)}$    $B23K\ 9/095^{(2006.01)}$
$B23K\ 9/12^{(2006.01)}$

(52) Cooperative Patent Classification (CPC):
B23K 9/032; B23K 9/04; B23K 9/073; B23K 9/095;
B23K 9/12

(86) International application number:
PCT/JP2023/015393

(87) International publication number:
WO 2023/223739 (23.11.2023 Gazette 2023/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 16.05.2022 JP 2022080525

(71) Applicant: KABUSHIKI KAISHA KOBE SEIKO
SHO (KOBE STEEL, LTD.)
Hyogo 651-8585 (JP)

(72) Inventors:
• HASHIMOTO, Hiroshi
  Nishi-ku, Kobe-shi, Hyogo 651-2271 (JP)
• SHINOZAKI, Takahiro
  Nishi-ku, Kobe-shi, Hyogo 651-2271 (JP)

(74) Representative: Müller-Boré & Partner
Patentanwälte PartG mbB
Friedenheimer Brücke 21
80639 München (DE)

(54) **CONTROL METHOD OF WELD BEAD FORM, ELECTRIC POWER SOURCE CONTROL METHOD, ADDITIVE MANUFACTURING METHOD, CONTROL DEVICE, ELECTRIC POWER SOURCE DEVICE, WELDING SYSTEM, AND ADDITIVE MANUFACTURING SYSTEM AND PROGRAM**

(57)    A welding bead shape of welding beads formed by periodically repeating a forward feeding period and a backward feeding period of a welding wire as one cycle and providing an arc period during which an arc is generated at a torch tip end and a short-circuit period during the one cycle is controlled. A control method for a welding bead shape includes: keeping an average feeding speed of the welding wire constant; and based on characteristic information in which a peak current value and a short-circuit time are associated with each other, detecting the short-circuit time and controlling the peak current value for each cycle of feeding of the welding wire so that the short-circuit time falls within a target range determined according to the characteristic information.

EP 4 501 509 A1

# FIG. 3

WELDING CURRENT

Ip

Ib

t1

t2

TIME

Tf

TP

TN

PULLING BACK

FEEDING

WIRE FEEDING SPEED

Fave

0

TIME

COMMAND VALUE

DETECTED VALUE

1/f

St

WELDING VOLTAGE

TIME

M

M

M

M

WIRE FEEDING AMPLITUDE

P1
HIGHEST POINT

P2
INTERMEDIATE POINT
(HIGHEST SPEED)

P3
LOWEST POINT

P1
HIGHEST POINT

**Description**

TECHNICAL FIELD

The present invention relates to a control method for a welding bead shape, a power supply control method, an additive manufacturing method, a control device, a power supply device, a welding system, an additive manufacturing system, and a program.

BACKGROUND ART

CMT (Cold Metal Transfer) welding is known as a method of welding by intermittently generating an arc through feeding a welding wire forward and backward and controlling energization between a contact tip and a molten pool. In the CMT welding, when a welding bead is formed when the welding wire is melted into droplets, a current is decreased immediately before a short circuit, and the welding wire is pulled back after the short circuit, thereby promoting the separation of the droplets and controlling a welding current at the time of the arc reignition to a minimum limit. Accordingly, droplet transfer with reduced spatter can be implemented. In addition, in the CMT welding, the welding current is controlled in synchronization with the forward and backward feeding of the welding wire, the welding wire is sent out toward the molten pool when an arc is generated, and the wire is immediately pulled back to cool the molten pool when a short circuit is detected, thereby reducing heat input.

Such a CMT welding technique is described in, for example, Patent Literature 1. Patent Literature 1 describes a power supply control method in which additive manufacturing is assumed, in which a welding current, a free length of a welding wire, a contact tip-workpiece distance (tip-base metal distance), and the like are adjusted while monitoring a feeding speed of the welding wire in order to keep a travel speed constant, thereby compensating for a shape deviation of a welding bead to be formed.

CITATION LIST

PATENT LITERATURE

Patent Literature 1: WO 2021/219677A1

SUMMARY OF INVENTION

TECHNICAL PROBLEM

The above-described CMT (Cold Metal Transfer) welding is a welding technique particularly suitable for joining thin plates, in which a current waveform is set to a constant pattern in order to ensure a constant penetration, a short circuit occurs between the contact tip and the molten pool, and an arc is reliably reignited, thereby implementing low spatter with low heat input. However, in the CMT welding, a timing of feeding and pulling back of the welding wire is changed when the tip-base metal distance is changed, and thus an average feeding speed of the welding wire is changed. The change in the average feeding speed does not cause a problem in the welding of thin plates, but is not preferable when a repetition stability of a process is strongly required, for example, as in additive manufacturing, and a welding bead shape is desired to be constant.

The present invention solves the above-described problems, and an object of the present invention is to provide a control method for a welding bead shape, a power supply control method, an additive manufacturing method, a control device, a power supply device, a welding system, an additive manufacturing system, and a program that can make a welding bead shape constant in real time regardless of a tip-base metal distance without changing an average feeding speed of a welding wire even when welding is performed by repeating feeding and pulling back of the welding wire.

SOLUTION TO PROBLEM

The present invention has the following configuration.

(1) A control method for a welding bead shape at the time of manufacturing an additively manufactured object by repeatedly depositing welding beads formed by periodically repeating a forward feeding period and a backward feeding period of a welding wire as one cycle and providing an arc period during which an arc is generated at a torch tip end and a short-circuit period during the one cycle, the method including:

keeping an average feeding speed of the welding wire constant; and

based on characteristic information in which a peak current value at which a welding current rises from a base current and a short-circuit time that is a length of the short-circuit period in the one cycle are associated with each other, detecting the short-circuit time and controlling the peak current value for each cycle of feeding of the welding wire so that the short-circuit time falls within a target range determined according to the characteristic information.

(2) A power supply control method for controlling a welding power supply based on the control method for a welding bead shape according to (1).

(3) An additive manufacturing method for manufacturing an additively manufactured object by depositing the welding beads formed based on the control method for a welding bead shape according to (1).

(4) A control device for controlling the welding current based on the control method for a welding bead shape according to (1).

(5) A welding power supply including: the control device according to (4).

(6) A welding system including: the welding power supply according to (5).

(7) An additive manufacturing system including: the welding system according to (6), in which an additively manufactured object is built by depositing the welding beads.

(8) A program for implementing a function of controlling a welding bead shape at the time of manufacturing an additively manufactured object by repeatedly depositing welding beads formed by periodically repeating a forward feeding period and a backward feeding period of a welding wire as one cycle and providing an arc period during which an arc is generated at a torch tip end and a short-circuit period during the one cycle, the program causing a computer to implement:

a function of keeping an average feeding speed of the welding wire constant; and

a function of, based on characteristic information in which a peak current value at which a welding current rises from a base current and a short-circuit time that is a length of the short-circuit period in the one cycle are associated with each other, detecting the short-circuit time and controlling the peak current value for each cycle of feeding of the welding wire so that the short-circuit time falls within a target range determined according to the characteristic information.

ADVANTAGEOUS EFFECTS OF INVENTION

According to the present invention, the welding bead shape can be made constant in real time regardless of a tip-base metal distance without changing the average feeding speed of the welding wire even when welding is performed by repeating feeding and pulling back of the welding wire.

BRIEF DESCRIPTION OF DRAWINGS

[FIG. 1] FIG. 1 is a schematic diagram illustrating an overall configuration of an additive manufacturing system.

[FIG. 2] FIG. 2 is a block diagram illustrating a schematic configuration of a power supply control unit provided in a welding power supply unit.

[FIG. 3] FIG. 3 is a timing chart of a welding current, a wire feeding speed, and a welding voltage controlled by the power supply control unit.

[FIG. 4] FIG. 4 is a graph illustrating waveforms of a welding current and a welding voltage in a first control example.

[FIG. 5] FIG. 5 is a flowchart illustrating a procedure for adjusting a peak current according to a short-circuit time and a welding voltage.

[FIG. 6] FIG. 6 is a graph illustrating waveforms of a welding current and a welding voltage in a second control example.

[FIG. 7] FIG. 7 is a flowchart illustrating a procedure for setting a peak current according to the presence or absence of a short circuit.

[FIG. 8] FIG. 8 is a graph illustrating waveforms of a welding current, a welding voltage, and a wire feeding speed in a third control example.

[FIG. 9] FIG. 9 is a flowchart illustrating a procedure for controlling the welding current and the wire feeding speed according to the presence or absence of a short circuit.

DESCRIPTION OF EMBODIMENTS

Hereinafter, embodiments of the present invention will be described in detail with reference to the drawings.

<Configuration of Welding Device>

Here, a welding system to be used for building an additively manufactured body will be described. The welding system shown here is used in a case of manufacturing a three-dimensional additively manufactured object by depositing welding beads, and forms welding beads by periodically repeating a forward feeding period and a backward feeding period of a welding wire as one cycle, and providing an arc period during which an arc is generated at a torch tip end and a short-circuit period during the one cycle. The welding system controls a welding bead shape when an additively manufactured object is manufactured by repeatedly depositing such welding beads. A configuration of the welding system to be described later is an example and is not limited thereto.

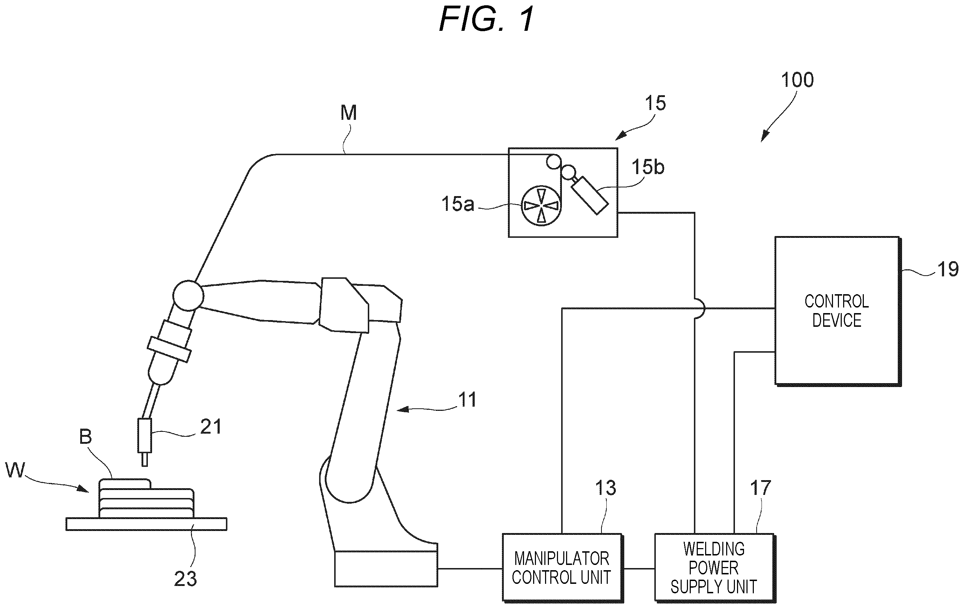

FIG. 1 is a schematic diagram illustrating an overall configuration of an additive manufacturing system 100.

The additive manufacturing system 100 as an example of the welding system includes a manipulator 11, a manipulator control unit 13, a wire supply unit 15, a welding power supply unit 17, and a control device 19.

The manipulator 11 is, for example, an articulated robot, and a welding wire M is supported by a torch 21 provided on a tip end shaft of the manipulator 11 so as to be continuously supplied. The torch 21 holds the welding wire M in a state of protruding from a tip end thereof. A position and posture of the torch 21 can be freely set three-dimensionally within a range of degrees of freedom of a robot arm constituting the manipulator 11. The manipulator 11 preferably has six or more degrees of freedom, and is preferably capable of freely changing a position of a heat source at the torch tip end in a torch axial direction. The manipulator 11 may be in various forms, such as an articulated robot having four or more axes illustrated in FIG. 1 or a robot having angle adjustment mechanisms on two or more orthogonal axes.

The torch 21 includes a shield nozzle (not illustrated), and is supplied with shield gas from the shield nozzle. The shield gas blocks the atmosphere, prevents oxidation, nitridation, and the like of molten metal during welding, and reduces welding failures. An arc welding method used in this configuration may be any one of a consumable electrode type such as coated arc welding or carbon dioxide gas arc welding, and a non-consumable electrode type such as the Tungsten Inert Gas (TIG) welding or plasma arc welding, and is appropriately selected depending on an additively manufactured body to be built. Here, gas metal arc welding will be described as an example. In the case of the consumable electrode type, a contact tip is disposed inside the shield nozzle, and the welding wire M to which a current is supplied is held by the contact tip. The torch 21 generates an arc from a tip end of the welding wire M in a shield gas atmosphere while holding the welding wire M.

The manipulator control unit 13 mainly controls an operation of the manipulator 11. The manipulator control unit 13 holds teaching data that defines an operation pattern, a welding start position, a welding end position, a welding condition, a weaving operation, and the like of the manipulator 11 in advance, and instructs the manipulator 11 on these pieces of training data to control the operation of the manipulator 11. The manipulator control unit 13 provides the welding power supply unit 17 with information on welding conditions such as a welding current, a welding voltage, and a feeding speed during a welding operation according to the teaching data. A controller (not illustrated) is connected to the manipulator control unit 13, and any operation on the manipulator control unit 13 by an operator can be instructed via the controller.

The wire supply unit 15 supplies the welding wire M toward the torch 21. The wire supply unit 15 includes a reel 15a around which the welding wire M is wound, and a feeding mechanism 15b that feeds the welding wire M from the reel 15a. The feeding mechanism 15b includes a feeding motor or the like serving as feeding power of the welding wire M. The welding wire M is fed to the torch 21 while being fed forward or backward by the feeding mechanism 15b as necessary. That is, the welding wire M is fed forward or backward at a tip end of the torch 21, whereby a tip end position of the welding wire M is changed. The feeding mechanism 15b is not limited to a push type disposed on a wire supply unit 15 side to push out the welding wire M, and may be a pull type or a push-pull type disposed on the robot arm or the like.

The welding power supply unit 17 includes a power supply control unit and a power supply that supplies electric power required for welding by the manipulator 11. The welding power supply unit 17 adjusts a welding current and a welding voltage to be supplied at the time of forming beads by melting and solidifying the welding wire M. In addition, a feeding speed of the welding wire W is adjusted by the wire supply unit 15 in conjunction with the welding conditions such as the welding current and the welding voltage set by the welding power supply unit 17.

A heat source for melting the welding wire M is not limited to the above-described arc. For example, a heat source using another method such as a heating method using both an arc and a laser, a heating method using plasma, or a heating method using an electron beam or a laser may be used. In the case of heating by an electron beam or a laser, a heating amount can be more finely controlled, and a state of a bead to be formed can be more appropriately maintained, thereby contributing to further improvement in quality of an additive structure. In addition, a material of the welding wire M is not particularly limited, and for example, types of the welding wire M to be used may be different according to properties of the additively manufactured body such as mild steel, high-tensile steel, aluminum, aluminum alloy, nickel, and nickel-base alloy.

The additive manufacturing system 100 having the above-described configuration operates according to a manufacturing program created based on a manufacturing plan of the additively manufactured body. The manufacturing program includes a large number of command codes, and is created based on an appropriate algorithm according to various conditions such as a shape, a material, and a heat input amount of a manufactured object. When the welding wire M to be fed is melted and solidified while moving the torch 21 according to the manufacturing program, linear welding beads B which are molten and solidified bodies of the welding wire M are formed on a base 23. That is, the manipulator control unit 13 drives each unit such as the manipulator 11, the wire supply unit 15, and the welding power supply unit 17 based on a predetermined manufacturing program provided by the control device 19. The manipulator 11 forms the welding beads B by moving the torch 21 while melting the welding wire M with an arc, according to a command from the manipulator control unit 13. By sequentially forming and depositing the welding beads B in this manner, the additively manufactured body (workpiece W) having a desired shape can be obtained.

<Functional Configuration of Welding Power Supply Unit>

Next, a functional configuration of the welding power supply unit 17 will be described in detail.

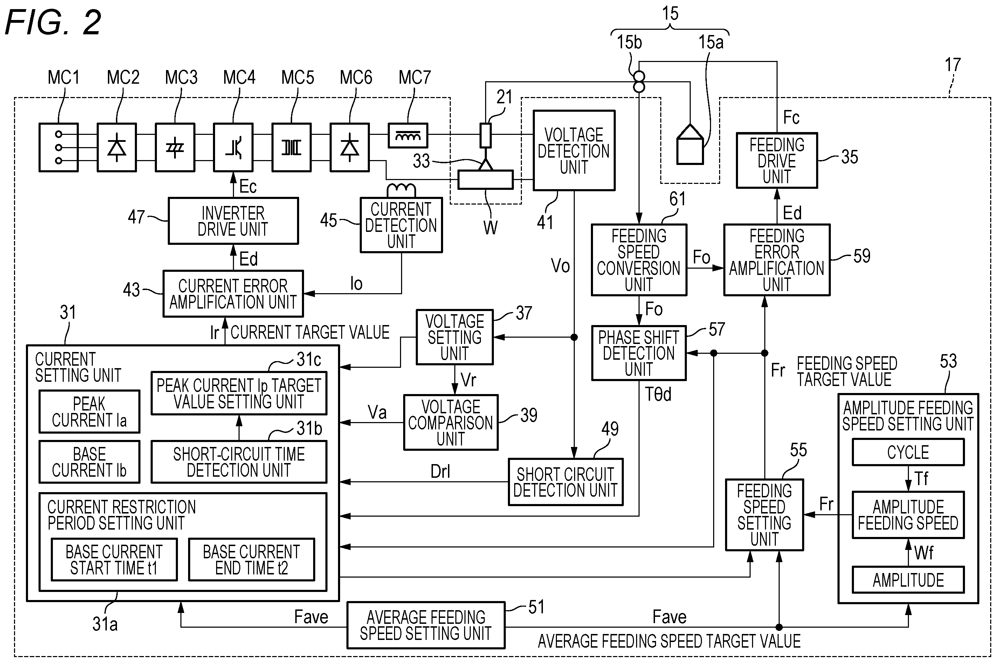

FIG. 2 is a block diagram illustrating a schematic configuration of the power supply control unit provided in the welding power supply unit 17.

The power supply control unit of the welding power supply unit 17 is executed, for example, through execution of a program by the control device 19 or a computer (not illustrated).

The power supply control unit of the welding power supply unit 17 includes a current setting unit 31. The current setting unit 31 according to the present embodiment has a function of setting various current values that define a welding current flowing through the welding wire M. The current setting unit 31 further has a function of setting, by a current restriction period setting unit 31a, a time t1 at which a period during which a current value of a welding current is restricted starts and a time t2 at which the period ends, a function of detecting a short-circuit time by a short-circuit time detection unit 31b, and a function of setting a target value of a peak current by a peak current target value setting unit 31c.

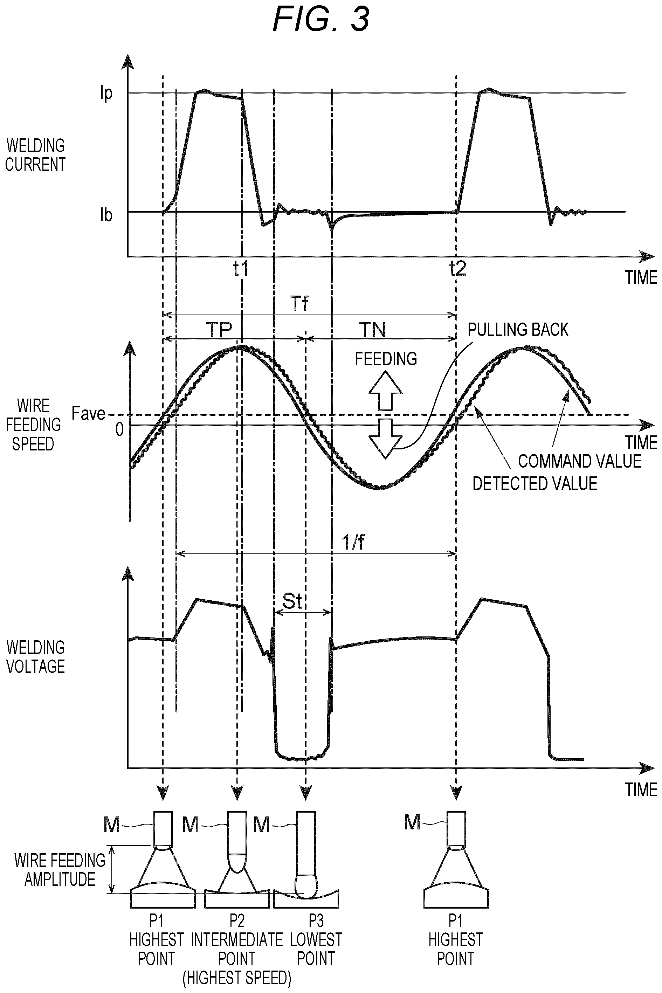

FIG. 3 is a timing chart of a welding current, a wire feeding speed, and a welding voltage controlled by the power supply control unit.

In the present embodiment, the welding current shows a pulse waveform in which a welding current in a current non-restriction period and a welding current in a current restriction period are alternately repeated. The current setting unit 31 sets a set current value $I_p$ (hereinafter, also referred to as "peak current $I_p$") in the current non-restriction period and a set current value $I_b$ (hereinafter, also referred to as "base current $I_b$") in the current restriction period. The peak current $I_p$ is provided in a waveform rising from the base current $I_b$, and is larger than the base current $I_b$. The current setting unit 31 basically controls the welding current with two values of the peak current $I_p$ and the base current $I_b$ based on information on a wire tip end position (feeding speed signal of welding wire).

A power supply main circuit of the welding power supply unit 17 illustrated in FIG. 2 includes a three-phase alternating-current power supply (hereinafter, also referred to as "alternating-current power supply") MC1, a primary-side rectifier MC2, a smoothing capacitor MC3, a switching element MC4, a transformer MC5, a secondary-side rectifier MC6, and a reactor MC7.

An alternating-current power input from the alternating-current power supply MC1 is full-wave rectified by the primary-side rectifier MC2 and further smoothed by the smoothing capacitor MC3 to be converted into a direct-current power. Next, the direct-current power is converted into a high-frequency alternating-current power by inverter control using the switching element MC4, and then converted into a secondary-side power via the transformer MC5. An alternating-current output of the transformer MC5 is full-wave rectified by the secondary-side rectifier MC6 and further smoothed by the reactor MC7. An output current of the reactor MC7 is supplied to a welding tip of the torch 21 as an output from the power supply main circuit, and the welding wire M serving as a consumable electrode is energized.

The welding wire M is fed by the feeding motor of the feeding mechanism 15b, and an arc 33 is generated between the welding wire M and the workpiece (also referred to as a base metal) W. In the present embodiment, the feeding mechanism 15b provides a forward feeding period TP (FIG. 2) in which the tip end of the welding wire M moves toward the base metal W and a backward feeding period TN (FIG. 2) in which the tip end of the welding wire M moves a direction opposite to the direction in which the base metal W is located. The feeding mechanism 15b feeds the welding wire M so as to be periodically switched when the forward feeding period TP and the backward feeding period TN are set as one cycle. Hereinafter, the movement of the tip end of the welding wire M toward the base metal W is also referred to as "forward feeding" and "feeding", and the opposite direction thereof is also referred to as "backward feeding" and "pulling back". In addition, the "tip end of the welding wire" referred to herein generally refers to a wire tip end when the presence of droplets hanging down from the tip end of the welding wire M is ignored. That is, the welding wire M melted by the arc 33 is considered to be transferred to the base metal W immediately.

The feeding of the welding wire M made by the feeding mechanism 15b is controlled by a control signal Fc from the feeding drive unit 35. An average value of the feeding speed (average feeding speed) of the welding wire M is substantially the same as a melting speed of the welding wire M, and is kept constant in the present embodiment.

A voltage setting signal $V_r$, which is a target value of a voltage applied between the welding tip of the torch 21 and the base metal W, is supplied from the voltage setting unit 37 to the current setting unit 31. The voltage setting signal $V_r$ is also supplied to a voltage comparison unit 39 and compared with a voltage detection signal $V_o$ detected by a voltage detection unit 41. The voltage detection signal $V_o$ is a measured value. The voltage comparison unit 39 amplifies a difference between the voltage setting signal $V_r$ and the voltage detection signal $V_o$, and outputs the amplified difference to the current setting unit 31 as a voltage error amplification signal $V_a$.

Based on the voltage setting signal $V_r$ and the voltage error amplification signal $V_a$, the current setting unit 31 resets a value of the peak current $I_p$, a value of the base current $I_b$, a period during which the peak current $I_p$ is applied, or a size of the value of the peak current $I_p$, and a size of the value of the base current $I_b$, and outputs to a current error amplification unit 43 a current setting signal of a current target value $I_r$ corresponding to the reset period or size of the value.

The current error amplification unit 43 amplifies a difference between the current setting signal applied as the current target value $I_r$ and a current detection signal $I_o$ detected by a current detection unit 45, and outputs the amplified difference to the inverter drive unit 47 as a current error amplification signal $E_d$. The inverter drive unit 47 corrects a drive signal $E_c$ of the switching element MC4 based on the current error amplification signal $E_d$.

The current setting unit 31 also receives a short circuit detection signal $D_{rl}$, which is a signal that detects a short circuit of the welding current. The short circuit detection signal $D_{rl}$ is output from a short circuit detection unit 49. The short circuit detection unit 49 monitors a change in the voltage detection signal $V_o$ output from the voltage detection unit 41, and detects a short circuit in the welding current based on the change.

The short circuit detection unit 49 detects a short circuit by, for example, comparing the value of the voltage detection signal $V_o$ with a detection threshold value. The detection threshold value is stored in advance in a storage unit (not illustrated).

The current setting unit 31 also receives an average feeding speed $F_{ave}$ of the welding wire M to be fed. The average feeding speed $F_{ave}$ is output by an average feeding speed setting unit 51 based on teaching data stored in the storage unit (not illustrated). The current setting unit 31 determines various parameters such as current values of the peak current $I_p$ and the base current $I_b$, a time t1 at which the peak current $I_p$ starts to be supplied, and a time t2 at which the base current $I_b$ ends to be supplied, based on the applied average feeding speed $F_{ave}$.

The average feeding speed $F_{ave}$ is applied to an amplitude feeding speed setting unit 53. The amplitude feeding speed setting unit 53 determines a value of an amplitude $W_f$ and a value of a cycle Tf based on the input average feeding speed $F_{ave}$. The amplitude feeding means a feeding method in which a forward feeding period that is a period during which the feeding speed is larger than the average feeding speed $F_{ave}$ and a backward feeding period that is a period during which the feeding speed is smaller than the average feeding speed $F_{ave}$ alternately appear. The period during which the feeding speed is smaller than the average feeding speed $F_{ave}$ refers to a period during which a feeding speed is smaller than the average feeding speed $F_{ave}$, the feeding speed including a negative feeding speed, that is, a speed at which the wire tip end moves to the direction opposite to the position of the base metal W. The amplitude $W_f$ gives a change width with respect to the average feeding speed $F_{ave}$, and the cycle Tf gives a time of amplitude change, which is a repetition unit. The amplitude feeding speed setting unit 53 generates an amplitude feeding speed $F_f$ corresponding to the determined value of the amplitude $W_f$ and the determined value of the cycle Tf or the frequency f, and outputs the amplitude feeding speed $F_f$ to the feeding speed setting unit 55.

The feeding speed setting unit 55 outputs a feeding speed target value signal $F_r$ based on the amplitude feeding speed $F_f$ and the average feeding speed $F_{ave}$. In the present embodiment, the feeding speed target value signal $F_r$ is represented by the following equation.

[Formula 1]

$$F_r = F_f + F_{ave} \qquad \text{... [Formula 1]}$$

The feeding speed target value signal $F_r$ is output to a phase shift detection unit 57, a feeding error amplification unit 59, and the current setting unit 31.

The feeding error amplification unit 59 amplifies a difference between the feeding speed target value signal $F_r$, which is information on a target speed, and a feeding speed detection signal $F_o$ obtained by measuring the feeding speed of the welding wire M made by the feeding mechanism 15b, and outputs a speed error amplification signal $F_d$ for correcting an error difference to the feeding drive unit 35.

The feeding drive unit 35 generates the control signal $F_c$ based on the speed error amplification signal $F_d$, and provides the control signal $F_c$ to the feeding mechanism 15b. The feeding speed conversion unit 61 converts a rotation amount of a drive motor of the feeding mechanism 15b and the like into the feeding speed detection signal $F_o$ of the welding wire M.

The phase shift detection unit 57 according to the present embodiment compares the feeding speed target value signal $F_r$ with the feeding speed detection signal $F_o$, which is a measured value, and outputs a phase shift time $T_{\theta d}$. The phase shift detection unit 57 may determine the phase shift time $T_{\theta d}$ by measuring a feeding operation of the feeding mechanism 15b in a case in which parameters defining the amplitude feeding, for example, the cycle Tf and the amplitude $W_f$ are varied.

The phase shift time $T_{\theta d}$ is applied to the current setting unit 31. The current setting unit 31 corrects an error of a feeding amount of the welding wire M based on the feeding speed target value signal $F_r$ and the phase shift time $T_{\theta d}$. The above is a basic function of the power supply control unit.

<Control of Welding Current>

Next, the control of the welding current using the above-described power supply control unit will be described.

As illustrated in FIG. 3, in the present embodiment, the welding wire is fed to the torch tip end at a feeding/pulling back speed of a sine wave centered on the average feeding speed $F_{ave}$, and the welding current is changed in accordance with the feeding operation of the welding wire. An arc length, which is an important factor for reducing heat input, can be controlled by a pulling back amount of the welding wire M and a timing of outputting the peak current $I_p$. The present control is executed based on speed control rather than position control of the welding wire M. A feeding amount and the pulling back amount of the welding wire M are obtained by time-integrating the feeding speed of the welding wire.

In a basic control example shown here, the welding current is increased when the welding wire M starts to be fed from an uppermost end position P1 of a feeding amplitude, and the welding current is decreased at a maximum speed reaching point (wire intermediate point P2) to prepare for a short circuit. When the welding wire approaches a wire lowest point P3, a short circuit occurs, and after the welding wire is pulled back through the wire lowest point P3, the short circuit is released and the arc is reignited. A timing at which the welding current is increased is preferably determined based on a command value of the wire feeding speed, and the maximum speed reaching point is preferably determined based on a detected value of the wire feeding speed, which are not limited thereto. The wire feeding speed may be measured by using a well-known method, such as using an encoder or the like that detects the rotation of the motor provided in the feeding mechanism 15b.

The welding wire M in this process has a constant average feeding speed $F_{ave}$, and operates at a set forward and backward wire feeding frequency and amplitude. Therefore, a peak value of the welding current becomes a control operation amount. Specifically, the welding voltage average value and the short-circuit time at the time of arc are fed back, and the peak current $I_p$ is controlled (for example, PI control) so that the arc length falls within a predetermined range using a deviation from target values. The welding can be stably executed by using the present control method at a feeding speed of the welding wire of about 3 mpm or more. However, when the feeding speed is smaller than 3 mpm, it becomes difficult to maintain a melting balance of the welding wire, and a non-short circuit state or a short circuit state frequently continues for a long period of time, making it difficult to stably form beads.

Therefore, in the present control method, a specific process is added so that a predetermined short-circuit period can be reliably obtained, and when the short-circuit period is inappropriate, a short circuit is generated in a necessary and sufficient period, or a short circuit is forcibly generated, whereby a stable bead shape can also be formed at the feeding speed of the welding wire of 1 mpm. In each control example to be described later, it is assumed that an average feeding speed (value per unit time or per unit cycle) of the wire feeding speed is kept constant. Therefore, according to the present control method, the bead shape is stable, and thus an additively manufactured object with high shape accuracy can be stably manufactured in real time.

<First Control Example>

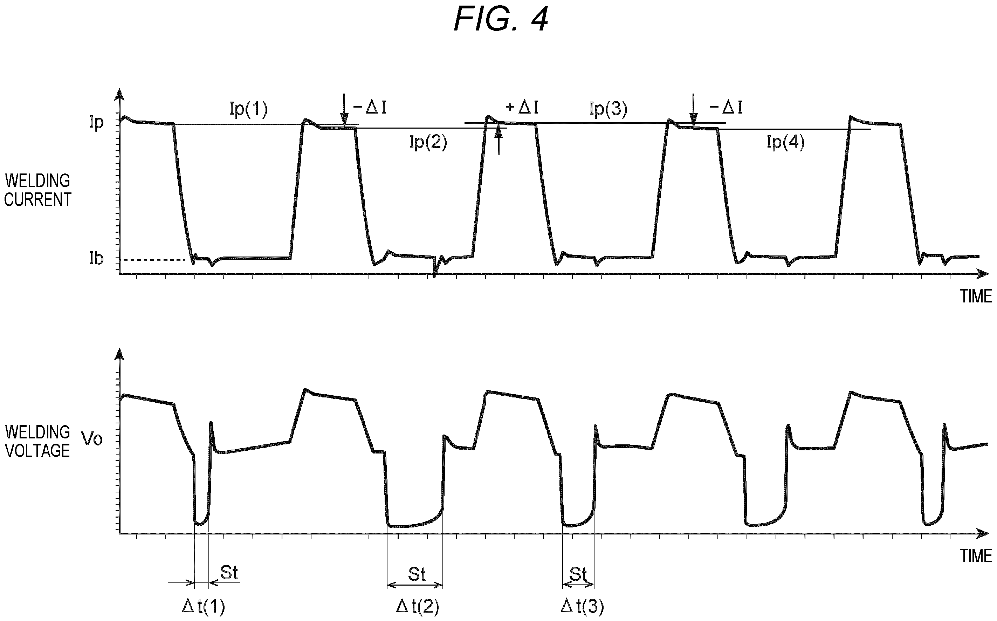

FIG. 4 is a graph illustrating waveforms of a welding current and a welding voltage in a first control example.

In the first control example, a length of a short-circuit period (short-circuit time) is measured, and the obtained short-circuit time is compared with a predetermined short-circuit target time, and when the short-circuit time is too large or too small as compared with the short-circuit target time, the welding current is adjusted so that the short-circuit time becomes the short-circuit target time. The short-circuit target time may not be one point, and may be set to a specific time range. When a specific time range is set, the welding current is adjusted so that the short-circuit time falls within the specific time range. In the present control example, the average feeding speed $F_{ave}$ of the welding wire is set to 1.5 mpm.

As illustrated in FIG. 3, when the welding current set to the peak current $I_p$ is decreased to the base current $I_b$ during the forward feeding period TP of the welding wire, the tip end of the forward fed welding wire is short-circuited to the base metal, and the welding voltage rapidly decreases. When the tip end of the welding wire is separated from the base metal during the backward feeding period TN of the welding wire and enters the arc period, the welding voltage increases again. A period during which the welding voltage decreases corresponds to a short-circuit period St. The short-circuit period St can be specified based on the waveform of the welding voltage.

Specifically, the voltage detection unit 41 illustrated in FIG. 2 detects a voltage waveform (voltage detection signal $V_o$) of the welding voltage, and the short circuit detection unit 49 detects the short-circuit period St based on the voltage detection signal $V_o$ of the welding voltage illustrated in FIG. 4 and outputs the short circuit detection signal $D_{rl}$ to the current

setting unit 31. The short circuit detection unit 49 compares, for example, a voltage value of the voltage detection signal $V_o$ with a predetermined short-circuit determination voltage $V_{th}$, determines a period during which the voltage detection signal $V_o$ exceeds the short-circuit determination voltage $V_{th}$ ($V_o > V_{th}$) as an arc period, and determines a period during which a voltage signal is equal to or smaller than the short-circuit determination voltage $V_{th}$ ($V_o \leqq V_{th}$) as a short-circuit period. Accordingly, the short-circuit period can be accurately detected.

The short circuit detection unit 49 outputs a determination result as the short circuit detection signal $D_{rl}$ to the current setting unit 31. The short-circuit time detection unit 31b of the current setting unit 31 detects a time length of the short-circuit period St, that is, a short-circuit time $\Delta t$ (i) (i is an integer) based on the input short circuit detection signal $D_{rl}$ and the voltage detection signal $V_o$, and outputs the short-circuit time $\Delta t$ (i) to the peak current target value setting unit 31c.

The peak current target value setting unit 31c adjusts a current target value $I_r$ (i + 1) of a peak current $I_p$ (i + 1) during the forward feeding period TP in a next cycle Tf (FIG. 3) with a correction value $\Delta I$ as shown in Equation (2) according to the obtained short-circuit time $\Delta t$ (i).
[Formula 2]

$$I_r(i + 1) = I_p(i) + \Delta I \qquad \text{... [Formula 2]}$$

For example, when it is determined that a short-circuit time $\Delta t$ (1) is shorter than a short-circuit target time range, a current target value $I_r$ (2) of a peak current $I_p$ (2) in a next cycle is corrected by adding a negative correction value $\Delta I$ to a peak current $I_p$ (1). Similarly, in a next short-circuit period St, a short-circuit time $\Delta t$ (2) is detected, and when it is determined that the short-circuit time $\Delta t$ (2) is longer than the short-circuit target time range, a current target value $I_r$ (3) of a peak current Ip (3) in a next cycle is corrected by adding a positive correction value $\Delta I$ to the peak current $I_p$ (2). Each correction value $\Delta I$ is set according to a length of the short-circuit time. In this way, for each short-circuit period St, the peak current $I_p$ (i + 1) in the next cycle Tf is adjusted according to each short-circuit time $\Delta t$ (i), and the short-circuit period St normally falls within the short-circuit target time range.

The correction value $\Delta I$ is set based on characteristic information in which the peak current value and the short-circuit time are associated with each other. The characteristic information may be a predetermined arithmetic expression or a table value obtained experimentally or analytically, and is stored in the storage unit (not illustrated) as a database.

The peak current target value setting unit 31c may set a target value of the peak current $I_p$ according to the short-circuit time and the welding voltage.

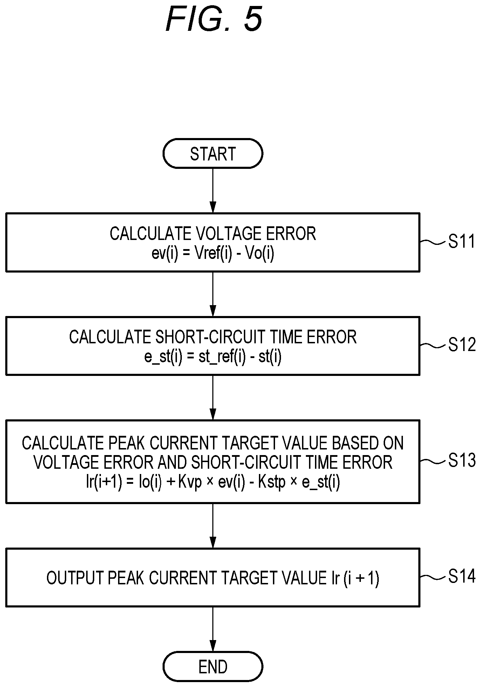

FIG. 5 is a flowchart illustrating a procedure for adjusting the peak current $I_p$ according to the short-circuit time and the welding voltage. In this case, a voltage target value $V_{ref}$ (i) and a short-circuit time target value st_ref in each short-circuit period St are set in advance.

First, as shown in Equation (3), a difference between the voltage target value $V_{ref}$ (i) and the voltage value of the voltage detection signal $V_o$ is obtained as a voltage error ev (i) (step S11, hereinafter referred to as S11).
[Formula 3]

$$ev(i) = V_{ref}(i) - V_0(i) \qquad \text{... [Formula 3]}$$

As shown in Equation (4), a difference between a short-circuit time target value st_ref (i) and a short-circuit time detection value st (i) is obtained as a short-circuit time error e_st (i) (S12).
[Formula 4]

$$e\_st(i) = st\_ref(i) - st(i) \qquad \text{... [Formula 4]}$$

Next, using the obtained voltage error ev (i) and short-circuit time error e_st (i), the current target value $I_r$ (i + 1) of the peak current in the next cycle Tf is calculated according to Equation (5) (S 13).
[Formula 5]

$$I_r(i + 1) = I_0 + K_{vp} \times ev(i) - K_{stp} \times e\_st(i) \qquad \text{... [Formula 5]}$$

Here, $K_{vp}$ is a voltage error gain, and $K_{stp}$ is a time error gain.
The current target value $I_r$ (i + 1) of the peak current obtained according to Equation (5) is output to the current error amplification unit 43 (S14). Accordingly, the current value of the peak current $I_p$ is changed to the current target value $I_r$. As a result, the short-circuit time is set more appropriately, and an effect of keeping the arc length constant is enhanced.

As described above, in the present control, the short-circuit time is detected and an adjustment amount is added to the peak current value for each cycle of feeding of the welding wire so that the short-circuit time falls within a target range based on a relation between the peak current value of the welding current and the short-circuit time while keeping the average feeding speed of the welding wire in a fixed state during depositing welding beads. Such adjustment of the welding current is executed by real-time feedback (FB) control. Therefore, by performing the real-time FB control for each pulse in a current waveform (or for each forward and backward wire feeding cycle Tf), a melting cycle of the welding wire can be stabilized even under a low heat input condition in which the feeding speed of the welding wire is 1 mpm to 3 mpm.

<Second Control Example>

In a cycle of melting, welding, and separation of a welding wire, a short circuit may not occur even when a wire tip end is fed to a lowermost end of amplitude feeding. This is because a tip-base metal distance is longer than expected due to a decrease in a feeding amount of the welding wire due to an external force. Therefore, in the present control, it is detected whether there is a short circuit in accordance with a cycle of forward feeding and backward feeding of the welding wire, and when no short circuit occurs in the backward feeding period TN, the welding current in the next cycle Tf is decreased so as not to pass at the peak current $I_p$. Accordingly, no droplet of the welding wire is formed, and as a result, the spatter is prevented from being generated. The peak current $I_p$ is decreased for each cycle Tf of feeding of the welding wire by performing the real-time FB control.

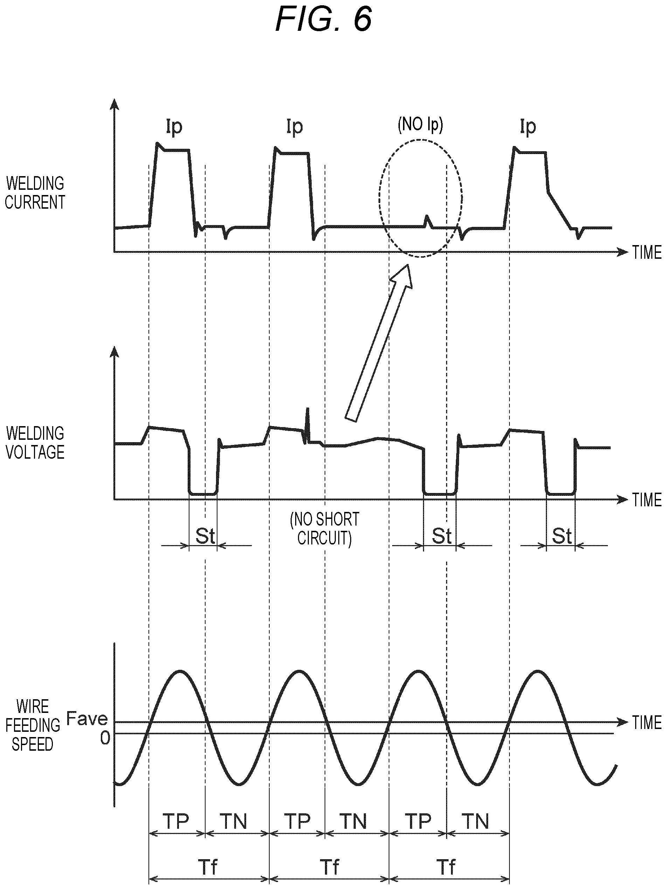

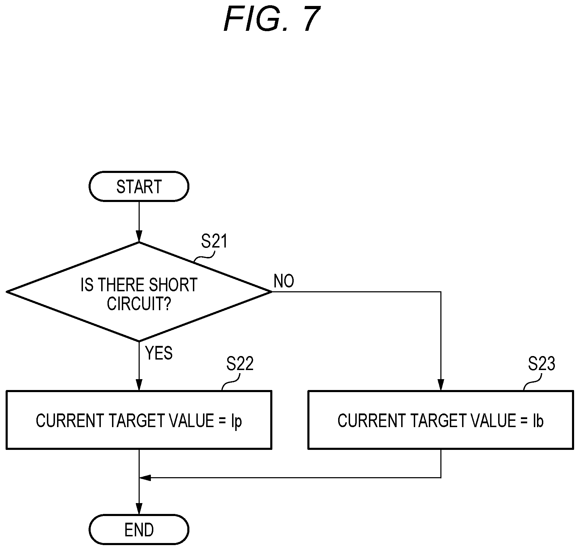

FIG. 6 is a graph illustrating waveforms of a welding current and a welding voltage in the second control example. FIG. 7 is a flowchart illustrating a procedure for setting the peak current $I_p$ according to the presence or absence of a short circuit.

In the second control example, the short circuit detection unit 49 illustrated in FIG. 2 detects the presence or absence of a short circuit based on the voltage detection signal $V_o$ of the welding voltage for each cycle Tf of the feeding of the welding wire. As in the first control example, the presence or absence of a short circuit is determined based on the waveform of the welding voltage (voltage detection signal $V_o$), and a result thereof is output as the short circuit detection signal $D_{rl}$ to the current setting unit 31 (S21). When the input short circuit detection signal $D_{rl}$ indicates that there is a short circuit (St (i) > 0), the current setting unit 31 sets the current target value $I_r$ for generating the peak current $I_p$ in the welding current in the next cycle Tf (S22). On the other hand, when there is no short circuit, the current setting unit 31 sets the current target value $I_r$ for maintaining the base current $I_b$ without generating the peak current $I_p$ in the next cycle Tf (S23).

According to the present control example, when no short circuit is generated in one cycle Tf, in a cycle Tf next to the one cycle Tf, no peak current $I_p$ is generated during the forward feeding period TP of the welding wire, and the peak current $I_p$ is temporarily prevented from being added to maintain the base current $I_b$. Accordingly, the spatter of the droplets at the wire tip end, which occurs when a peak current is generated in the next cycle Tf, can be prevented in advance. As a result, the occurrence of spatter and a change in shape of the welding bead can be prevented. In the present control example, it is preferable to adjust the peak current $I_p$ in the next cycle Tf according to the short-circuit time as in the first control example.

<Third Control Example>

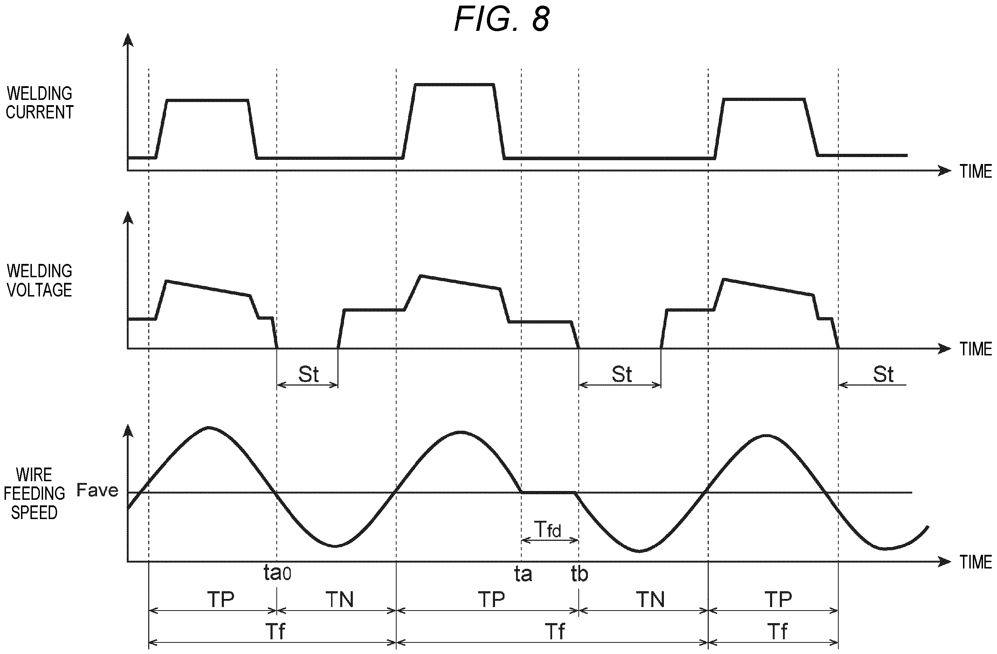

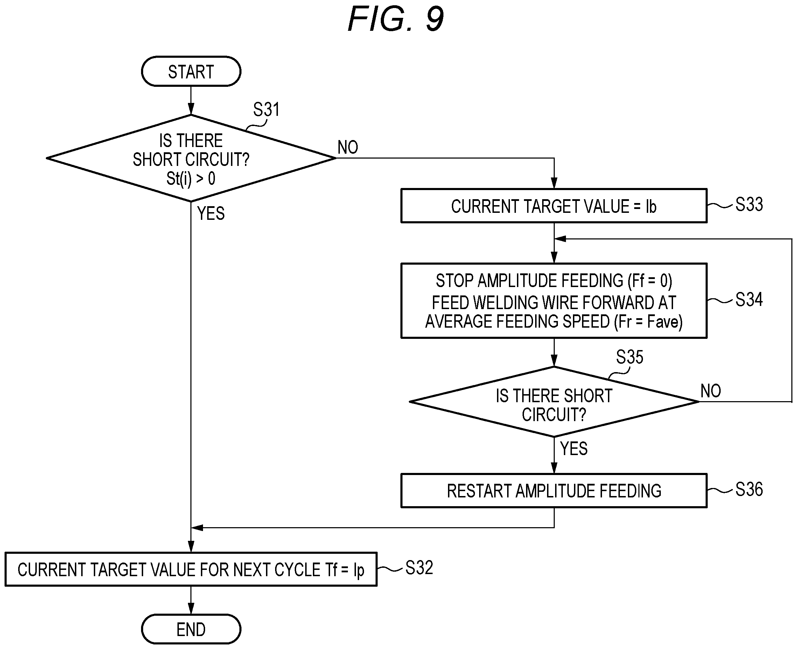

FIG. 8 is a graph illustrating waveforms of a welding current, a welding voltage, and a wire feeding speed in a third control example. FIG. 9 is a flowchart illustrating a procedure for controlling the welding current and the wire feeding speed according to the presence or absence of a short circuit.

As described above, in the cycle of melting, welding, and separation of the welding wire, no short circuit occurs even when the wire tip end is fed to the lowermost end of amplitude feeding, and the tip-base metal distance may be longer than expected. Therefore, in the present control, when no short circuit occurs within the cycle Tf of forward and backward feeding of the welding wire, the welding wire is continuously forward fed until a short circuit occurs without backward feeding of the welding wire. This brings the tip end of the welding wire closer to the base metal, forcing a short circuit. This facilitates the continuous formation of welding beads.

A time $ta_0$ in the waveform of the welding voltage illustrated in FIG. 8 indicates that the welding voltage is short-circuited when the wire tip end reaches the average feeding speed $F_{ave}$ immediately before the lowermost end of the amplitude feeding. However, at a time ta at which the wire tip end reaches the average feeding speed $F_{ave}$ when there is a transition from the forward feeding period TP to the backward feeding period TN within the next cycle Tf, the welding voltage is maintained in a state of not being short-circuited. In this case, in the present control, the welding wire is continuously fed forward at the average feeding speed $F_{ave}$ without being pulled back. Then, at a time tb when there is a short circuit, the welding wire starts to be pulled back.

Specifically, as in the second control example, the short circuit detection unit 49 illustrated in FIG. 2 detects the presence or absence of a short circuit based on the voltage detection signal $V_o$ of the welding voltage for each cycle Tf of the feeding of the welding wire (S31). The presence or absence of a short circuit is determined by comparing the waveform of the welding voltage (voltage detection signal $V_o$) with the short-circuit determination voltage $V_{th}$ as in the first control example.

The current setting unit 31 detects the time ta at which the wire tip end reaches the average feeding speed $F_{ave}$ when there is a transition from the forward feeding period TP to the backward feeding period TN. If there is a short circuit when the current setting unit 31 detects the time ta, the process returns to a normal cycle, and the welding current in the next cycle Tf is set to the peak current $I_p$ (S32). On the other hand, when there is no short circuit, the welding current of a current cycle Tf is kept at the base current $I_b$ (S33), the feeding speed setting unit 55 stops the amplitude feeding ($F_f = 0$), and a control signal for feeding the welding wire forward at the average feeding speed $F_{ave}$ is output (S34). Thus, the feeding speed setting unit 55 outputs the feeding speed target value signal $F_r$ ($F_r = F_{ave}$) for setting the average feeding speed $F_{ave}$ to the target speed, and sets the feeding speed of the welding wire M made by the feeding mechanism 15b to the average feeding speed $F_{ave}$.

The welding wire M is continuously fed forward at the average feeding speed $F_{ave}$ (period $T_{fd}$). When the short circuit detection unit 49 detects a short circuit in this state (S35), the current setting unit 31 outputs the feeding speed target value signal $F_r$ for restarting the amplitude feeding and causing the feeding speed setting unit 55 to start backward feeding (S36). Accordingly, the process returns to the normal cycle, and the welding current in the next cycle Tf is set to the peak current $I_p$ in S32.

In the feeding period $T_{fd}$ during which the welding wire is fed forward from the time ta to the time tb, the feeding speed is set to a preset average feeding speed $F_{ave}$ from the viewpoint of making the travel speed constant. Accordingly, the average feeding speed $F_{ave}$ in an entire processing does not fluctuate, and a shape of the welding bead is easily maintained constant.

The feeding speed of the welding wire may be controlled by, for example, switching a torque value generated by the feeding motor provided in the feeding mechanism 15b. In the present control example, it is preferable to adjust the peak current $I_p$ in the next cycle Tf according to the short-circuit time as in the first control example.

As described above, the present invention is not limited to the above-described embodiments, and combinations of the respective configurations of the embodiments and changes and applications made by those skilled in the art based on the description of the specification and well-known techniques are also intended for the present invention and are included in the scope of protection.

Although each of the above-described control examples is mainly executed by the power supply control unit of the welding power supply unit 17, each of the control examples may be executed by the control device 19 or may be executed by another computer through a line such as a network. The welding power supply unit 17 may be implemented by a welding power supply including the control device 19.

As described above, the present specification discloses the following matters.

(1) A control method for a welding bead shape at the time of manufacturing an additively manufactured object by repeatedly depositing welding beads formed by periodically repeating a forward feeding period and a backward feeding period of a welding wire as one cycle and providing an arc period during which an arc is generated at a torch tip end and a short-circuit period during the one cycle, the method including:

keeping an average feeding speed of the welding wire constant; and
based on characteristic information in which a peak current value at which a welding current rises from a base current and a short-circuit time that is a length of the short-circuit period in the one cycle are associated with each other, detecting the short-circuit time and controlling the peak current value for each cycle of feeding of the welding wire so that the short-circuit time falls within a target range determined according to the characteristic information. According to the control method for a welding bead shape, the welding beads can be stably formed in real time by providing a short-circuit period of an appropriate time.

(2) The control method for a welding bead shape according to (1), in which the peak current value is adjusted to be decreased when the short-circuit time is smaller than the target range, and is adjusted to be increased when the short-circuit time is larger than the target range.
According to the control method for a welding bead shape, a cycle of melting, welding, and separation of the welding wire can be stabilized by precisely adjusting the short-circuit time.
(3) The control method for a welding bead shape according to (1) or (2), in which the short-circuit time is a period during which a welding voltage is equal to or smaller than a predetermined short-circuit determination voltage.
According to the control method for a welding bead shape, the short-circuit period can be accurately detected according to the short-circuit determination voltage.
(4) The control method for a welding bead shape according to (3), further including:

obtaining an average value of the welding voltage in a period during which energization is executed at the peak current value; and

determining a target value of the peak current value according to the short-circuit time and the average value of the welding voltage.

According to the control method for a welding bead shape, the short-circuit time can be adjusted more appropriately.

(5) The control method for a welding bead shape according to any one of (1) to (4), further including:

temporarily stopping the energization at the peak current value when there is no transition from the arc period to a short-circuit period within the one cycle of the feeding of the welding wire.

According to the control method for a welding bead shape, the spatter of droplets at the wire tip end can be prevented in advance, and the occurrence of spatter and a change in shape of the welding bead can be prevented.

(6) The control method for a welding bead shape according to (5), further including: maintaining a base current smaller than the peak current value without executing the energization at the peak current value in one cycle next to the one cycle when there is no transition from the arc period to the short-circuit period within the one cycle after the energization is executed at the peak current value in the forward feeding period of the one cycle.

According to the control method for a welding bead shape, the spatter of droplets at the wire tip end, which occurs when a peak current is generated in the next cycle Tf, can be prevented in advance, and the occurrence of spatter and the change in shape of the welding bead can be prevented.

(7) The control method for a welding bead shape according to any one of (1) to (4), further including: feeding the welding wire until there is a transition to the short-circuit period while maintaining a feeding speed of the welding wire at the average feeding speed when there is no transition from the arc period to the short-circuit period in a case in which the feeding speed of the welding wire decreases and reaches the average feeding speed.

According to the control method for a welding bead shape, the tip end of the welding wire is brought closer to the base metal, forcing a short circuit. This facilitates the continuous formation of welding beads.

(8) A power supply control method for controlling a welding power supply based on the control method for a welding bead shape according to any one of (1) to (7).

According to the power supply control method, the bead shape of the welding bead is stable by the power supply control, and good welding can be performed.

(9) An additive manufacturing method for manufacturing an additively manufactured object by depositing the welding beads formed based on the control method for a welding bead shape according to any one of (1) to (7).

According to the additive manufacturing method, the bead shape is stable, and thus an additively manufactured object having a more highly accurate deposited shape can be manufactured.

(10) A control device for controlling the welding current based on the control method for a welding bead shape according to any one of (1) to (7).

According to the control device, the welding beads can be stably formed by controlling the welding current.

(11) A welding power supply including: the control device according to (10).

According to the welding power supply, the welding power supply itself controls each unit such as adjusting the short-circuit period, whereby a good welding bead with high shape accuracy can be easily formed.

(12) A welding system including: the welding power supply according to (11).

According to the welding system, welding with high shape accuracy can be performed.

(13) An additive manufacturing system including: the welding system according to (12), in which an additively manufactured object is built by depositing the welding beads.

According to the additive manufacturing system, an additively manufactured object with high shape accuracy can be manufactured.

(14) A program for implementing a function of controlling a welding bead shape at the time of manufacturing an additively manufactured object by repeatedly depositing welding beads formed by periodically repeating a forward feeding period and a backward feeding period of a welding wire as one cycle and providing an arc period during which an arc is generated at a torch tip end and a short-circuit period during the one cycle, the program causing a computer to implement:

a function of keeping an average feeding speed of the welding wire constant; and

a function of, based on characteristic information in which a peak current value at which a welding current rises from a base current and a short-circuit time that is a length of the short-circuit period in the one cycle are associated with each other, detecting the short-circuit time and controlling the peak current value for each cycle of feeding of the welding wire so that the short-circuit time falls within a target range determined according to the characteristic information.

According to the program, the welding beads can be stably formed in real time by providing a short-circuit period of an appropriate time.

The present application is based on Japanese Patent Application No. 2022-080525 filed on May 16, 2022, the contents of which are incorporated herein by reference.

REFERENCE SIGNS LIST

11: manipulator
13: manipulator control unit
15: wire supply unit
15a: reel
15b: feeding mechanism
17: welding power supply unit
19: control device
21: torch
23: base
31: current setting unit
31a: current restriction period setting unit
31b: short-circuit time detection unit
31c: peak current target value setting unit
33: arc
35: feeding drive unit
37: voltage setting unit
39: voltage comparison unit
41: voltage detection unit
43: current error amplification unit
45: current detection unit
47: inverter drive unit
49: short circuit detection unit
51: average feeding speed setting unit
53: amplitude feeding speed setting unit
55: feeding speed setting unit
57: phase shift detection unit
59: feeding error amplification unit
61: feeding speed conversion unit
100: additive manufacturing system
B: welding bead
$D_{rl}$: short circuit detection signal
$E_c$: drive signal
$E_d$: current error amplification signal
f: frequency
$F_{ave}$: average feeding speed
$F_c$: control signal
$F_d$: speed error amplification signal
$F_f$: amplitude feeding speed
$F_r$: feeding speed target value signal
$F_o$: feeding speed detection signal
$I_b$: base current
$I_p$: peak current
$I_o$: current detection signal
$I_r$: current setting signal
W: welding wire
MC1: three-phase alternating-current power supply (alternating-current power supply)
MC2: primary-side rectifier

MC3: smoothing capacitor
MC4: switching element
MC5: transformer
MC6: secondary-side rectifier
MC7: reactor
P1: uppermost end position
P2: wire intermediate point
P3: wire lowest point
TP: forward feeding period
TN: backward feeding period
Tf: cycle
$T_{\theta d}$: phase shift time
$T_{fd}$: feeding period
$V_a$: voltage error amplification signal
$V_o$: voltage detection signal
$V_r$: voltage setting signal
W: workpiece (additively manufactured body)
$W_f$: amplitude
ΔI: correction value

**Claims**

1. A control method for a welding bead shape at the time of manufacturing an additively manufactured object by repeatedly depositing welding beads formed by periodically repeating a forward feeding period and a backward feeding period of a welding wire as one cycle and providing an arc period during which an arc is generated at a torch tip end and a short-circuit period during the one cycle, the method comprising:

   keeping an average feeding speed of the welding wire constant; and
   based on characteristic information in which a peak current value at which a welding current rises from a base current and a short-circuit time that is a length of the short-circuit period in the one cycle are associated with each other, detecting the short-circuit time and controlling the peak current value for each cycle of feeding of the welding wire so that the short-circuit time falls within a target range determined according to the characteristic information.

2. The control method for a welding bead shape according to claim 1, wherein
   the peak current value is adjusted to be decreased when the short-circuit time is smaller than the target range, and is adjusted to be increased when the short-circuit time is larger than the target range.

3. The control method for a welding bead shape according to claim 1, wherein
   the short-circuit time is a period during which a welding voltage is equal to or smaller than a predetermined short-circuit determination voltage.

4. The control method for a welding bead shape according to claim 3, further comprising:

   obtaining an average value of the welding voltage in a period during which energization is executed at the peak current value; and
   determining a target value of the peak current value according to the short-circuit time and the average value of the welding voltage.

5. The control method for a welding bead shape according to claim 1, further comprising:
   temporarily stopping the energization at the peak current value when there is no transition from the arc period to a short-circuit period within the one cycle of the feeding of the welding wire.

6. The control method for a welding bead shape according to claim 5, further comprising:
   maintaining a base current smaller than the peak current value without executing the energization at the peak current value in one cycle next to the one cycle when there is no transition from the arc period to the short-circuit period within the one cycle after the energization is executed at the peak current value in the forward feeding period of the one cycle.

7. The control method for a welding bead shape according to claim 1, further comprising:
feeding the welding wire until there is a transition to the short-circuit period while maintaining a feeding speed of the welding wire at the average feeding speed when there is no transition from the arc period to the short-circuit period in a case in which the feeding speed of the welding wire decreases and reaches the average feeding speed.

8. A power supply control method for controlling a welding power supply based on the control method for a welding bead shape according to any one of claims 1 to 7.

9. An additive manufacturing method for manufacturing an additively manufactured object by depositing the welding beads formed based on the control method for a welding bead shape according to any one of claims 1 to 7.

10. A control device for controlling the welding current based on the control method for a welding bead shape according to any one of claims 1 to 7.

11. A welding power supply comprising: the control device according to claim 10.

12. A welding system comprising: the welding power supply according to claim 11.

13. An additive manufacturing system comprising:

the welding system according to claim 12, wherein
an additively manufactured object is built by depositing the welding beads.

14. A program for implementing a function of controlling a welding bead shape at the time of manufacturing an additively manufactured object by repeatedly depositing welding beads formed by periodically repeating a forward feeding period and a backward feeding period of a welding wire as one cycle and providing an arc period during which an arc is generated at a torch tip end and a short-circuit period during the one cycle, the program causing a computer to implement:

a function of keeping an average feeding speed of the welding wire constant; and
a function of, based on characteristic information in which a peak current value at which a welding current rises from a base current and a short-circuit time that is a length of the short-circuit period in the one cycle are associated with each other, detecting the short-circuit time and controlling the peak current value for each cycle of feeding of the welding wire so that the short-circuit time falls within a target range determined according to the characteristic information.

## FIG. 1

# FIG. 2

EP 4 501 509 A1

# FIG. 3

## FIG. 4

EP 4 501 509 A1

# FIG. 5

```
                    ┌──────────────┐
                    │    START     │
                    └──────┬───────┘
                           │
                           ▼
    ┌──────────────────────────────────────────┐
    │      CALCULATE VOLTAGE ERROR             │──── S11
    │      ev(i) = Vref(i) - Vo(i)             │
    └──────────────────┬───────────────────────┘
                       │
                       ▼
    ┌──────────────────────────────────────────┐
    │   CALCULATE SHORT-CIRCUIT TIME ERROR      │──── S12
    │   e_st(i) = st_ref(i) - st(i)            │
    └──────────────────┬───────────────────────┘
                       │
                       ▼
    ┌──────────────────────────────────────────┐
    │ CALCULATE PEAK CURRENT TARGET VALUE BASED ON │──── S13
    │ VOLTAGE ERROR AND SHORT-CIRCUIT TIME ERROR   │
    │ Ir(i+1) = Io(i) + Kvp × ev(i) - Kstp × e_st(i) │
    └──────────────────┬───────────────────────┘
                       │
                       ▼
    ┌──────────────────────────────────────────┐
    │ OUTPUT PEAK CURRENT TARGET VALUE Ir (i + 1) │──── S14
    └──────────────────┬───────────────────────┘
                       │
                       ▼
                ┌──────────────┐
                │     END      │
                └──────────────┘
```

# FIG. 6

# FIG. 7

```
                    ┌─────────────┐
                    │    START    │
                    └──────┬──────┘
                           │
                           ▼                    S21
                    ╱─────────────╲
                   ╱  IS THERE SHORT ╲    NO
                  ╱    CIRCUIT?       ╲──────────────┐
                   ╲                 ╱               │
                    ╲───────────────╱                │
                           │ YES                     │
                           ▼                         ▼
              S22                          S23
   ┌──────────────────────────┐   ┌──────────────────────────┐
   │ CURRENT TARGET VALUE = Ip │   │ CURRENT TARGET VALUE = Ib │
   └────────────┬─────────────┘   └─────────────┬────────────┘
                │                                │
                ▼◄───────────────────────────────┘
        ┌─────────────┐
        │     END     │
        └─────────────┘
```

FIG. 8

# FIG. 9

START

S31 — IS THERE SHORT CIRCUIT? St(i) > 0

NO → CURRENT TARGET VALUE = Ib — S33

↓

STOP AMPLITUDE FEEDING (Ff = 0) FEED WELDING WIRE FORWARD AT AVERAGE FEEDING SPEED (Fr = Fave) — S34

↓

S35 — IS THERE SHORT CIRCUIT?

NO → (loop back to S34)

YES ↓

RESTART AMPLITUDE FEEDING — S36

YES ↓

CURRENT TARGET VALUE FOR NEXT CYCLE Tf = Ip — S32

↓

END

EP 4 501 509 A1

<table>
<tr><td colspan="2">**INTERNATIONAL SEARCH REPORT**</td><td colspan="2">International application No.<br>**PCT/JP2023/015393**</td></tr>
</table>

**A.      CLASSIFICATION OF SUBJECT MATTER**

*B23K 9/032*(2006.01)i; *B23K 9/04*(2006.01)i; *B23K 9/073*(2006.01)i; *B23K 9/095*(2006.01)i; *B23K 9/12*(2006.01)i
FI:    B23K9/095 505B; B23K9/073 545; B23K9/12 305; B23K9/032 Z; B23K9/04 G; B23K9/04 Z

According to International Patent Classification (IPC) or to both national classification and IPC

**B.      FIELDS SEARCHED**

Minimum documentation searched (classification system followed by classification symbols)

B23K9/032; B23K9/04; B23K9/073; B23K9/095; B23K9/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.      DOCUMENTS CONSIDERED TO BE RELEVANT**

| Category* | Citation of document, with indication, where appropriate, of the relevant passages | Relevant to claim No. |
|---|---|---|
| A | JP 2016-168617 A (PANASONIC INTELLECTUAL PROPERTY MANAGEMENT CO., LTD.) 23 September 2016 (2016-09-23)<br>entire text, all drawings | 1-14 |
| A | WO 2018/139222 A1 (DAIHEN CORP.) 02 August 2018 (2018-08-02)<br>entire text, all drawings | 1-14 |
| A | JP 2020-49506 A (KOBE STEEL, LTD.) 02 April 2020 (2020-04-02)<br>entire text, all drawings | 1-14 |
| A | WO 2021/024431 A1 (MITSUBISHI ELECTRIC CORP.) 11 February 2021 (2021-02-11)<br>entire text, all drawings | 1-14 |
| A | JP 2018-149570 A (KOBE STEEL, LTD.) 27 September 2018 (2018-09-27)<br>entire text, all drawings | 1-14 |

☐ Further documents are listed in the continuation of Box C.          ☑ See patent family annex.

| | |
|---|---|
| *      Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **23 May 2023** | **06 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/015393**

| Patent document cited in search report | | | Publication date (day/month/year) | Patent family member(s) | | | Publication date (day/month/year) |
|---|---|---|---|---|---|---|---|
| JP | 2016-168617 | A | 23 September 2016 | (Family: none) | | | |
| WO | 2018/139222 | A1 | 02 August 2018 | US | 2019/0337080 | A1 | |
| | | | | entire text, all drawings | | | |
| | | | | EP | 3575025 | A1 | |
| JP | 2020-49506 | A | 02 April 2020 | US | 2022/0032388 | A1 | |
| | | | | entire text, all drawings | | | |
| | | | | WO | 2020/067074 | A1 | |
| | | | | EP | 3858530 | A1 | |
| WO | 2021/024431 | A1 | 11 February 2021 | US | 2022/0324057 | A1 | |
| | | | | entire text, all drawings | | | |
| JP | 2018-149570 | A | 27 September 2018 | US | 2019/0381595 | A1 | |
| | | | | entire text, all drawings | | | |
| | | | | WO | 2018/168881 | A1 | |
| | | | | EP | 3597342 | A1 | |

Form PCT/ISA/210 (patent family annex) (January 2015)

**REFERENCES CITED IN THE DESCRIPTION**

**Patent documents cited in the description**

- WO 2021219677 A1

- JP 2022080525 A